# EUROPÄISCHE PATENTSCHRIFT

(11) **EP 0 316 012 B1**
(45) Veröffentlichungstag und Bekanntmachung des Hinweises auf die Patenterteilung: **31.03.1993**
(21) Anmeldenummer: 88118853.6
(22) Anmeldetag: 11.11.1988
(51) Int. Cl.: G09F 3/04, A01G 9/12

(54) **Pflanzstab mit aufgeschrumpfter Markierung**
Plant prop with a shrink-on marking
Tuteur de plantes avec marquage rétrécissant

(30) Priorität: 12.11.1987 DE 8715051 U
(43) Veröffentlichungstag der Anmeldung: 17.05.1989
(73) Patentinhaber: SEKISUI JUSHI CORPORATION, Kita-ku, Osaka 530 (JP)
(72) Erfinder: Nagae, Suketada, Toyono gun, Osaka (JP)
(74) Vertreter: Patentanwälte Dr. Solf & Zapf

(56) Entgegenhaltungen:
- DE-A- 2 511 756
- DE-A- 3 439 790
- DE-U- 8 709 606
- FR-A- 1 347 102
- GB-A- 2 167 376

## Beschreibung

Die vorliegende Erfindung betrifft einen Pflanzstab, bestehend aus einem Stabkörper, der einendig eine Spitze sowie vorzugsweise auf seiner Außenfläche eine Vielzahl von länglichen, in Längsrichtung des Stabkörpers verlaufende Erhebungen aufweist.

Derartige, beispielsweise aus der DE-A-3 439 790 bekannte Pflanzstäbe dienen als Stütze bzw. Rankhilfe für Pflanzen, wozu sie in unmittelbarer Nähe einer Pflanze in die Erde gesteckt werden. Selbstrankende Kletterpflanzen können so an dem Pflanzstab emporranken, und alle anderen Pflanzen können mittels geeigneter Befestigungsmittel, z.B. Blumendraht, an dem Pflanzstab befestigt werden. Die vorzugsweise auf der Außenfläche des Pflanzstabes vorgesehenen Erhebungen verhindern dabei ein Abrutschen der Pflanzenranken bzw. der Befestigungsmittel nach unten.

Da sich die auf dem Markt erhältlichen Pflanzstäbe durch ihre Materialqualität und/oder ihre Abmessungen und folglich auch im Verkaufspreis voneinander unterscheiden, werden sie in Verkaufsgeschäften üblicherweise mit aufzuklebenden Preismarkierungen versehen. Dies können Preisetiketten oder aber farbige Aufkleber sein, wobei über einen Farben-Kode jede Farbe einen bestimmten Preis bedeutet. Ebenfalls sind Aufkleber bekannt, die einen sog. Strich-Kode tragen, der mittels einer Licht-Abtastvorrichtung (Lichtgriffel) automatisch gelesen und in eine Registrierkasse eingegeben werden kann. Bei allen Möglichkeiten ist von Nachteil, daß die aufgeklebten Etiketten sich entweder selbsttätig lösen oder aber in betrügerischer Weise ausgetauscht werden könnten, um einen teureren Pflanzstab zu einem niedrigeren Preis zu erwerben.

Der vorliegenden Erfindung liegt nun die Aufgabe zugrunde, einen Pflanzstab mit einer dauerhaften, haltbaren und fälschungssicheren Preismarkierung anzugeben.

Erfindungsgemäß wird dies erreicht durch eine den Stabkörper durch Aufschrumpfung umschließende, schlauchförmige Schrumpffolie, die aus einem transparenten, unter Wärmeeinfluß schrumpfenden Kunststoff besteht, wobei zwischen der Außenfläche des Stabkörpers und der Schrumpffolie eine das Material der Schrumpffolie durchscheinende Markierung angeordnet ist. Diese Markierung kann z.B. eine numerische Preisangabe, eine kodierte Farbkennzeichnung oder aber ein Strich-Kode sein. Ferner ist die Schrumpffolie erfindungsgemäß in dem an die Spitze angrenzenden Endbereich des Stabkörpers angeordnet, was den Vorteil hat, daß dei Schrumpffolie bei der bestimmungsgemäßen Verwendung des Pflanzstabes unsichtbar ist und sich somit ein Entfernen der Folie erübrigt. Vorzugsweise weist die Schrumpffolie auf ihrer der Außenfläche des Stabkörpers zugekehrten Innenfläche einen die Markierung bildenden Aufdruck, vorzugsweise einen Siebdruck, auf, jedoch liegt es im Rahmen der Erfindung, zwischen der Schrumpffolie und dem Pflanzstab ein die Markierung bildendes oder aufweisendes Blatt, z.B. aus Papier o.dgl., anzuordnen.

Die z.B. mittels Warmluft (Fön) aufgeschrumpfte Schrumpffolie sitzt vorteilhafterweise derart fest auf dem Pflanzstab, daß sie nur noch durch Zerstörung entfernbar ist. Hierdurch werden Fälschungs- oder Austauschversuche sofort bemerkt. Durch ihre erfindungsgemäße Anordnung zwischen der Innenfläche der Schrumpffolie und der Außenfläche des Pflanzstabes ist die Markierung vorteilhafterweise gegen alle äußeren Einflüsse geschützt.

Ebenfalls ist es von Vorteil, daß die Schrumpffolie derart eng an der Außenfläche des Pflanzstabes anliegt, daß auch im Bereich der Folie die vorzugsweise vorgesehenen Erhebungen des Pflanzstabes voll erhalten bleiben, die im unteren Bereich des Pflanzstabes zu einer guten Verankerung in der Erde beitragen.

Weitere vorteilhafte Ausgestaltungsmerkmale der Erfindung sind in den Unteransprüchen sowie der folgenden Beschreibung enthalten.

Anhand der Zeichnung soll im folgenden die Erfindung beispielhaft näher erläutert werden. Dabei zeigen:
- Fig. 1: eine Perspektivansicht eines Stückes eines erfindungsgemäßen Pflanzstabes mit einer aufgeschrumpften Schrumpffolie,
- Fig. 2: einen Querschnitt längs der Linie II-II gemäß Fig.1 durch den außerhalb der Schrumpffolie liegenden Bereich des erfindungsgemäßen Pflanzstabes und
- Fig. 3: einen Querschnitt längs der Linie III-III gemäß Fig. 1 durch den Bereich der erfindungsgemäßen Pflanzstabes, in dem die Schrumpffolie angeordnet ist.

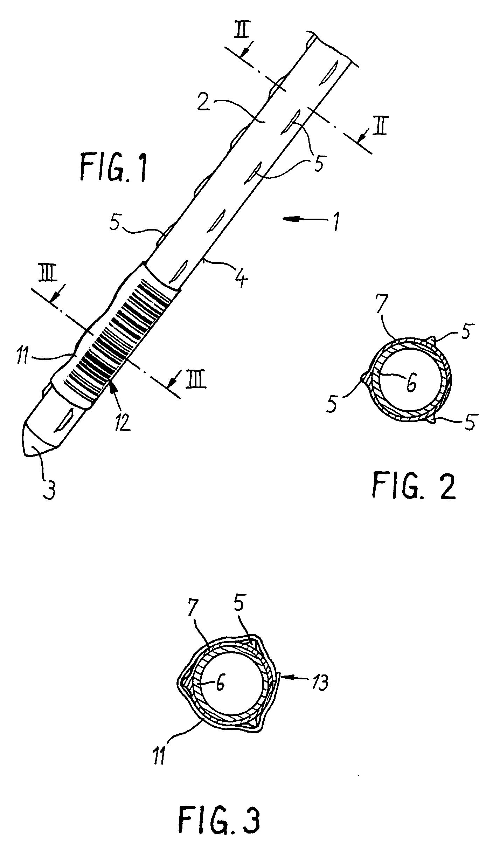

Gemäß Fig. 1 besteht ein erfindungsgemäßer Pflanzstab 1 aus einem Stabkörper 2, der zumindest einendig eine Spitze 3 und vorzugsweise auf seiner Außenfläche 4 eine Vielzahl von länglichen, in Längsrichtung des Stabkörpers 2 verlaufenden Erhebungen 5 aufweist. Die Erhebungen 5 dienen zum besseren Halt von Pflanzen, d.h. von Pflanzenranken oder von Befestigungsmaterial, wie Blumendraht u.dgl. an dem erfindungsgemäßen Pflanzstab 1, sowie aber auch zur Verbesserung der Verankerung des in die Erde eingesteckten Stabes 1.

Wie aus Fig. 2 zu erkennen ist, kann der Stabkörper 2 aus einem im Querschnitt kreisförmigen Tragrohr 6 z.B. aus Metall und einer das Tragrohr 6 umschließenden Umhüllung 7 z.B. aus Kunststoff bestehen, wobei die Erhebungen 5 vorzugsweise an die Umhüllung 7 angeformt sind. Es liegt jedoch ebenfalls im Rahmen der Erfindung, den Stabkörper 2 aus einem Vollmaterial, und zwar insbesondere aus Kunststoff, auszubilden.

Erfindungsgemäß ist nun eine den Stabkörper 2 durch Aufschrumpfung umschließende, schlauchförmige Schrumpffolie 11 vorgesehen, die aus einem transparenten, unter Wärmeeinfluß schrumpfenden Kunststoff besteht. Vorteilhafterweise ist zwischen der Außenfläche 4 des Stabkörpers 2 und der Schrumpffolie 11 eine das Material der Schrumpffolie 11 durchscheinende Markierung 12 angeordnet. Im dargestellten Ausführungsbeispiel der Erfindung ist diese Markierung 12 als Strich-Kodierung ausgebildet, wie sie heute zur Preiskennzeichnung auf vielen Verkaufsgütern angebracht ist. Die Markierung 12 kann jedoch ebenfalls auch z.B. eine konkrete, numerische Preisangabe oder eine Farbkennzeichnung sein.

Vorzugsweise weist die Schrumpffolie 11 auf ihrer der Außenfläche 4 des Stabkörpers 2 zugekehrten Innenfläche einen die Markierung 12 bildenden Aufdruck, und zwar vorzugsweise einen Siebdruck, auf.

Die Schrumpffolie 11 wird vorzugsweise unter Einwirkung von Heißluft, z.B. mittels eines Föns od.dgl., auf den Stabkörper 2 aufgeschrumpft. Die Folie 11 liegt derart eng an der Außenfläche 4 des Stabkörpers 2 an, daß die vorzugsweise vorgesehenen Erhebungen 5 erhalten bleiben, wie dies aus Fig. 1 und 3 gut zu erkennen ist. Der Deutlichkeit halber ist in Fig. 3 die Folie 11 hinsichtlich ihrer Dicke etwas übertrieben dargestellt, d.h. tatsächlich ist die Folie 11 im Vergleich zu den Abmessungen des Pflanzstabes 1 dünner ausgebildet.

Gemäß Fig. 1 ist die Schrumpffolie 11 zweckmäßigerweise in dem an die Spitze 3 angrenzenden Endbereich des Stabkörpers 2 angeordnet.

Die Schrumpffolie 11 besteht erfindungsgemäß aus einem transparenten oder zumindest transluzenten Kunststoff, z.B. PVC, so daß die Markierung 12 von außen durch die Folie 11 hindurch wahrnehmbar ist.

Wie aus Fig. 3 zu entnehmen ist, besteht die Schrumpffolie 11 zweckmäßigerweise aus einem flächenförmigen, im wesentlichen rechteckigen Folienstück, das zur Bildung eines Schlauches derart gerollt ist, daß sich zwei gegenüberliegende Ränder des Folienstückes überlappen, wobei die sich überlappenden Ränder eine Naht 13 bildend stoffschlüssig miteinander verbunden, insbesondere verschweißt sind. Diese Ausbildung der Schrumpffolie 11 als zunächst flächenförmiges Folienstück ermöglicht das Bedrucken der Innenfläche mit der Markierung 12.

Die vorliegende Erfindung schafft einen Pflanzstab mit einer dauerhaft und fest an dem Stabkörper haftenden Preismarkierung. Somit ist ein gewolltes oder ungewolltes Lösen der durch die Schrumpffolie befestigten Preismarkierung weitgehend ausgeschlossen bzw. nur durch Zerstörung der Schrumpffolie möglich. Die Funktion von etwaigen, auf der Außenfläche des Pflanzstabes ausgebildeten Erhebungen bleibt voll erhalten.

## Patentansprüche

1. Pflanzstab, bestehend aus einem Stabkörper (2), der einendig eine Spitze (3) sowie vorzugsweise auf seiner Außenfläche (4) eine Vielzahl von länglichen, in Längsrichtung des Stabkörpers verlaufenden Erhebungen (5) aufweist,
**gekennzeichnet** durch
eine den Stabkörper (2) durch Aufschrumpfung umschließende, schlauchförmige Schrumpffolie (11), die aus einem transparenten, unter Wärmeeinfluß schrumpfenden Kunststoff besteht, wobei zwischen der Außenfläche (4) des Stabkörpers (2) und der Schrumpffolie (11) eine das Material der Schrumpffolie (11) durchscheinende Markierung (12) angeordnet ist, und die Schrumpffolie (11) in dem an die Spitze (3) angrenzenden Endbereich des Stabkörpers (2) angeordnet ist.

2. Pflanzstab nach Anspruch 1,
**dadurch gekennzeichnet,**
daß die Schrumpffolie (11) auf ihrer der Außenfläche (4) des Stabkörpers (2) zugekehrten Innenfläche einen die Markierung (12) bildenden Aufdruck, vorzugsweise einen Siebdruck, aufweist.

3. Pflanzstab nach Anspruch 1 oder 2,
**dadurch gekennzeichnet,**
daß die Schrumpffolie (11) aus PVC besteht.

4. Pflanzstab nach einem oder mehreren der Ansprüche 1 bis 3,
**dadurch gekennzeichnet,**
daß die Schrumpffolie (11) aus einem flächenförmigen, im wesentlichen rechteckigen Folienstück besteht, das zur Bildung eines Schlauches derart gerollt ist, daß sich zwei gegenüberliegende Ränder des Folienstückes überlappen, wobei die sich überlappenden Ränder eine Naht (13) bildend, stoffschlüssig miteinander verbunden, insbesondere verschweißt sind.

5. Pflanzstab nach einem oder mehreren der Ansprüche 1 bis 4,
**dadurch gekennzeichnet,**
daß die Markierung (12) als Strich-Kode ausgebildet ist.

## Claims

1. Stake for plants, consisting of a stake member (2), which has a tip (3) at one end, and, preferably on its outer face, a large number of elongated projections (5), running in the longitudinal direction of the stake member,
characterised by
a hose-shaped shrinkage film (11) shrunk on round the stake member (2) and consisting of a transparent plastic which shrinks under the effect of heat, whereby a label (12) showing through the material of the shrinkage film (11) is arranged between the outer face (4) of the stake member(2) and the shrinkage film (11), and the shrinkage film (11) is arranged in the end region of the stake member (2) adjacent to the top (3).

2. Stake for plants according to claim 1,
characterised in that
the shrinkage film (11) has printing, preferably screen printing forming a label (12) on its inner face turned towards the outer face (4) of the stake member (2).

3. Stake for plants according to claim 1 or 2,
characterised in that
the shrinkage film (11) consists of PVC.

4. Stake for plants according to one or more of claims 1 to 3,
characterised in that
the shrinkage film (11) consists of a substantially rectangular piece of film in the form of a sheet, which is rolled to form a hose in such a manner that two opposite edges of the piece of film overlap, where the overlapping edges form a seam (13), being joined one with the other using the same substance, more particularly are fused together.

5. Stake for plants according to one or more of claims 1 to 4,
characterised in that
the label (12) is formed as a bar code.

## Revendications

1. Tuteur de plante avec marquage à rétreint, constitué d'un corps de baguette (2), qui présente à une des extrémités une pointe (3), ainsi que, de préférence, sur sa surface externe (4), un grand nombre de bosses allongées, disposées dans le sens longitudinal du corps de baguette, caractérisé par une feuille rétractable (11) en forme de tube entourant le corps de baguette (2) par emmanchement à chaud, et qui est constituée de matière plastique transparente rétractable à chaud, étant entendu qu'entre la surface externe (4) du corps de baguette (2) et la feuille rétractable (11) en forme de tube, est disposé un marquage (12) visible au travers du matériau de la feuille rétractable (11) et que la feuille rétractable (11) est disposée dans la zone d'extrémité du corps de baguette (2) voisine de la pointe (3).

2. Tuteur de plante suivant la revendication 1, caractérisé en ce que la feuille rétractable (11) présente, sur sa face intérieure tournée vers la surface externe (4) du corps de baguette (2), une impression constituant le marquage (12), par exemple une impression au pochoir.

3. Tuteur de plante suivant la revendication 1 ou la revendication 2, caractérisé en ce que la feuille rétractable (11) est constituée de PVC.

4. Tuteur de plante suivant l'une quelconque ou plusieurs des revendications 1 à 3, caractérisé en ce que la feuille rétractable (11) est constituée d'un morceau de feuille de forme plate, essentiellement rectangulaire, qui est enroulé en formant un tube, de telle façon que deux bords opposés du morceau de feuille se recouvrent, étant entendu qu'on relie entre eux, par leur propre substance, les bords se recouvrant l'un l'autre en formant un joint (13), en particulier qu'on les soude.

5. Tuteur de plante suivant l'une quelconque ou plusieurs des revendications 1 à 4, caractérisé en ce que le marquage (12) est réalisé sous la forme d'un codage par barres.
